# EUROPÄISCHE PATENTSCHRIFT

(11) **EP 3 261 786 B1**
(45) Veröffentlichungstag und Bekanntmachung des Hinweises auf die Patenterteilung: **19.12.2018**
(21) Anmeldenummer: 16705728.0
(22) Anmeldetag: 05.02.2016
(51) Int. Cl.: B21D 43/05, B65G 25/02

(54) **VORRICHTUNG ZUM SCHRITTWEISEN VORSCHIEBEN VON WERKSTÜCKEN**
DEVICE FOR THE STEPWISE ADVANCING OF WORKPIECES
DISPOSITIF D'AVANCE INCRÉMENTIELLE DE PIECES A USINER

(30) Priorität: 27.02.2015 DE 102015002496
(43) Veröffentlichungstag der Anmeldung: 03.01.2018
(73) Patentinhaber: Sander Automation GmbH, 77871 Renchen-Ulm (DE)
(72) Erfinder: NOCK, Klemens, 77704 Oberkirch (DE)
(74) Vertreter: Börjes-Pestalozza, Henrich
(86) Internationale Anmeldenummer: PCT/EP2016/000200
(87) Internationale Veröffentlichungsnummer: WO 2016/134821

(56) Entgegenhaltungen:
- EP-A1- 1 520 640
- DE-C1- 10 206 773
- JP-A- H1 080 736

## Beschreibung

Die Erfindung betrifft eine Vorrichtung zum schrittweisen Vorschieben von Werkstücken, mit zwei parallel zueinander angeordneten Greifschienen, die zum Erfassen und zum Transport der Werkstücke in einer Vorschubrichtung bewegbar sind, wobei jede Greifschiene zwischen einem ersten Endbereich und einem zweiten Endbereich einen Greifbereich aufweist, wobei in dem ersten Endbereich und in dem zweiten Endbereich jeweils ein verschwenkbarer erster Schwingarm einer Antrièbseinheit angreift, wobei die Greifschiene an einem freien Ende des ersten Schwingarms längs ihrer Verlaufsrichtung verschieblich gehalten ist.

Derartige Transportvorrichtungen sind beispielsweise bekannt aus DE 102 06 773 C1 und haben sich bewährt. Beispielsweise werden derartige Vorrichtungen als Vorschubvorrichtungen bei Maschinen zum Stanzen und/oder Biegen von metallischen Werkstücken eingesetzt, um die Werkstücken zwischen den einzelnen Bearbeitungsstationen zu transportieren.

Der Erfindung liegt die Aufgabe zugrunde, die Gebrauchseigenschaften einer derartigen Vorrichtung zu verbessern.

Erfindungsgemäß sind zur Lösung dieser Aufgabe die Merkmale: von Anspruch 1 vorgesehen. Insbesondere wird somit zur Lösung der genannten Aufgabe erfindungsgemäß bei einer Vorrichtung der eingangs beschriebenen Art vorgeschlagen, dass jede Antriebseinheit einen zweiten verschwenkbaren Schwingarm aufweist, welcher in der Verlaufsrichtung beabstandet zu dem ersten Schwingarm an der Greifschiene angreift, und dass die Greifschiene an einem freien Ende des zweiten Schwingarms längs ihrer Verlaufsrichtung verschieblich gehalten ist. Die Erfindung erreicht somit einerseits, dass die Greifschiene mit einer verbesserten Streifigkeit an der Antriebseinheit gehalten ist, und andererseits, dass eine Übertragung einer Zugbelastung in der Greifschiene, die sich durch ein Durchbiegen im Greifbereich an den Endbereichen einstellt, auf die Schwingarme verminderbar oder sogar vollständig vermeidbar ist. Auf diese Weise kann ein Verkanten oder Verwinden in der Antriebseinheit aufgrund eines Durchbiegens der Greifschiene vermieden oder zumindest reduziert werden. Hierdurch werden die Gebrauchseigenschaften verbessert. Durch die verschwenkbaren Schwingarme ist ein Abstand zwischen den zwei Greifschienen zum Greifen verringerbar und zum Freigeben des Werkstückes oder der Werkstücke vergrößerbar.

Bei einer vorteilhaften Ausgestaltung kann vorgesehen sein, dass der erste Schwingarm und/oder der zweite Schwingarm die Greifschiene in einem Gleit- und/oder Rolllager hält/halten. Somit ist eine Übertragung oder Umsetzung der Zugbelastung in eine Beanspruchung der Schwingarme auf einfache Weise reduzierbar oder vermeidbar. Die Verwendung eines Rolllagers ist besonders günstig, um niedrige Reibungsverluste zu erreichen. Dies ist besonders dann von Vorteil, wenn die Greifschiene zum Transport der Werkstücke an den Rolllagern längs ihrer Verlaufsrichtung verschoben wird.

Bei einer Ausgestaltung der Erfindung kann vorgesehen sein, dass der erste Schwingarm und der zweite Schwingarm einer Antriebseinheit von einem gemeinsamen Elektromotor angetrieben sind. Von Vorteil ist dabei, dass der apparative Aufwand bei der Vorrichtung möglichst gering haltbar ist. Von Vorteil ist weiter, dass eine synchrone Bewegung der Schwingarme einfach erreichbar ist.

Beispielsweise kann vorgesehen sein, dass der erste Schwingarm mechanisch mit dem zweiten Schwingarm gekoppelt ist. Somit sind aufeinander abgestimmte Bewegungsabläufe am ersten Schwingarm und am zweiten Schwingarm einfach aufeinander einstellbar und robust bereitstellbar.

Alternativ oder zusätzlich kann vorgesehen sein, dass der erste Schwingarm elektrisch mit dem zweiten Schwingarm gekoppelt ist, beispielsweise durch die Verwendung von jeweils einem Elektromotor für den ersten Schwingarm und für den zweiten Schwingarm und einer geeigneten gemeinsamen Ansteuereinheit. Von Vorteil ist dabei, dass eine Abstimmung der Bewegungsabläufe aufeinander einfach veränderbar ist.

Bei einer Ausgestaltung der Erfindung kann vorgesehen sein, dass jede Antriebseinheit zu einem gegenläufigen Verschwenken des ersten Schwingarms und des zweiten Schwingarms gegeneinander eingerichtet ist. Somit ist zumindest in einer Endposition einer Verschwenkbewegung der Schwingarme ein besonders großer Abstand der freien Enden der Schwingarme zueinander erreichbar. Hierdurch kann eine nochmals verbesserte Steifigkeit der Halterung erreicht werden.

Bei einer Ausgestaltung der Erfindung kann vorgesehen sein, dass jede Antriebseinheit zu einem gleichläufigen Verschwenken des ersten Schwingarmes und des zweiten Schwingarms miteinander eingerichtet ist. Von Vorteil ist dabei, dass ein Abstand der freien Enden der Schwingarme zueinander während der Verschwenkbewegung konstant haltbar ist. Somit ist ein Platzbedarf für eine Ausführung der Verschwenkungsbewegung besonders gering ausgestaltbar.

Bei einer Ausgestaltung der Erfindung kann vorgesehen sein, dass die zwei Greifschienen mit einer Traverse verbunden sind, welche in Vorschubrichtung motorisch bewegbar ist. Somit ist ein Transport der mit den Greifschienen gegriffenen Werkstücke zwischen unterschiedlichen Bearbeitungsstationen ausführbar.

Bei einer Ausgestaltung der Erfindung kann vorgesehen sein, dass die Schwingarme an der jeweiligen Antriebseinheit entlang einer jeweiligen Schwenkachse der Verschwenkbewegung verschiebbar angeordnet sind. Somit sind mit den Greifschienen gegriffene Werkstücke beispielsweise vertikal oder in einer dritten Dimension anhebbar, um einen Transport der Werkstücke einzuleiten. Besonders günstig ist es hierbei, wenn die Schwingarme motorisch antreibbar verschiebbar sind. Somit ist eine vollständige Transportbewegung der Werkstücke motorisch angetrieben ausführbar.

Bei einer Ausgestaltung der Erfindung kann vorgesehen sein, dass eine Ansteuereinheit zu einem gegenläufigen Verschwenken des ersten Schwingarms einer an dem ersten Endbereich der Greifschiene angreifenden ersten Antriebseinheit einerseits und des ersten Schwingarms einer an dem zweiten Endbereich der Greifschiene angreifenden zweiten Antriebseinheit andererseits gegeneinander eingerichtet ist. Somit ist in einer Endposition der Verschwenkbewegung der Paare von Schwingarmen an den beiden Endbereichen der Greifschiene gegeneinander ein besonders kleiner Abstand der freien Enden zueinander erreichbar. Durchbiegungen der Greifschiene sind somit nochmals reduzierbar.

Alternativ oder zusätzlich kann vorgesehen sein, dass eine, beispielsweise die bereits erwähnte, Ansteuereinheit zu einem gleichläufigen Verschwenken des ersten Schwingarms einer an dem ersten Endbereich der Greifschiene angreifenden ersten Antriebseinheit einerseits und des ersten Schwingarms einer an dem zweiten Endbereich der Greifschiene angreifenden zweiten Antriebseinheit andererseits miteinander eingerichtet ist. Von Vorteil ist dabei, dass ein Abstand der freien Enden der Schwingarme zueinander entlang der Greifschiene während der Verschwenkbewegung konstant haltbar ist. Somit ist ein Platzbedarf während der Verschwenkbewegung gering haltbar.

Bei einer Ausgestaltung der Erfindung kann vorgesehen sein, dass der erste Schwingarm und der zweite Schwingarm einer Antriebseinheit um zueinander parallele Schwenkachsen verschwenkbar sind. Somit ist auf einfache Weise eine Bewegung der Greifschienen gegeneinander durch Verschwenken der Schwingarme erreichbar. Die Schwenkachsen können hierbei voneinander beabstandet angeordnet sein oder zusammenfallen.

Bei einer Ausgestaltung der Erfindung kann vorgesehen sein, dass die Greifschienen oberhalb eines Tisches angeordnet sind. Somit sind die Werkstücke nach der bereits erwähnten Transportbewegung auf dem Tisch absetzbar und vor der Transportbewegung auf dem Tisch bereitstellbar.

Alternativ oder zusätzlich kann vorgesehen sein, dass die Greifschienen unterhalb eines vertikal beweglichen Stößels angeordnet sind. Somit sind zwischen den Transportbewegungen der Werkstücke an den Werkstücken Bearbeitungsschritte ausführbar. Besonders günstig ist es, wenn der Stößel Formgebungswerkzeuge trägt. Diese Formgebungswerkzeuge sind zur Ausführung eines Formgebungsbearbeitungsschrittes an den Werkstücken durch die vertikale Bewegung des Stößels einrichtbar.

Bei einer Ausgestaltung der Erfindung kann vorgesehen sein, dass an den Greifschienen Werkstückaufnahmen ausgebildet sind. Bevorzugt sind die Werkstückaufnahmen auf die bereits erwähnten Formgebungswerkzeuge abgestimmt. Von Vorteil ist dabei, dass die Werkstücke an den Greifschienen einfach und sicher haltbar sind.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Schutzansprüche untereinander.

Es zeigt:
- Figur 1: eine erfindungsgemäße Vorrichtung zum schrittweisen Vorschieben von Werkstücken in einer Seitenansicht,
- Figur 2: die erfindungsgemäße Vorrichtung gemäß Figur 1 in einer Ansicht von oben,
- Figur 3: die erfindungsgemäße Vorrichtung gemäß Figur 1 in einer Ansicht entlang der Vorschubrichtung,
- Figur 4: eine weitere erfindungsgemäße Vorrichtung zum schrittweisen Vorschieben von Werkstücken in einer Seitenansicht,
- Figur 5: die Vorrichtung gemäß Figur 4 in einer Ansicht von oben,
- Figur 6: eine weitere erfindungsgemäße Vorrichtung zum schrittweisen Vorschieben von Werkstücken in einer Seitenansicht,
- Figur 7: die Vorrichtung gemäß Figur 6 in einer Ansicht von oben,
- Figur 8: eine weitere erfindungsgemäße Vorrichtung zum schrittweisen Vorschieben von Werkstücken in einer Seitenansicht und
- Figur 9: die Vorrichtung gemäß Figur 8 in einer Ansicht von oben.

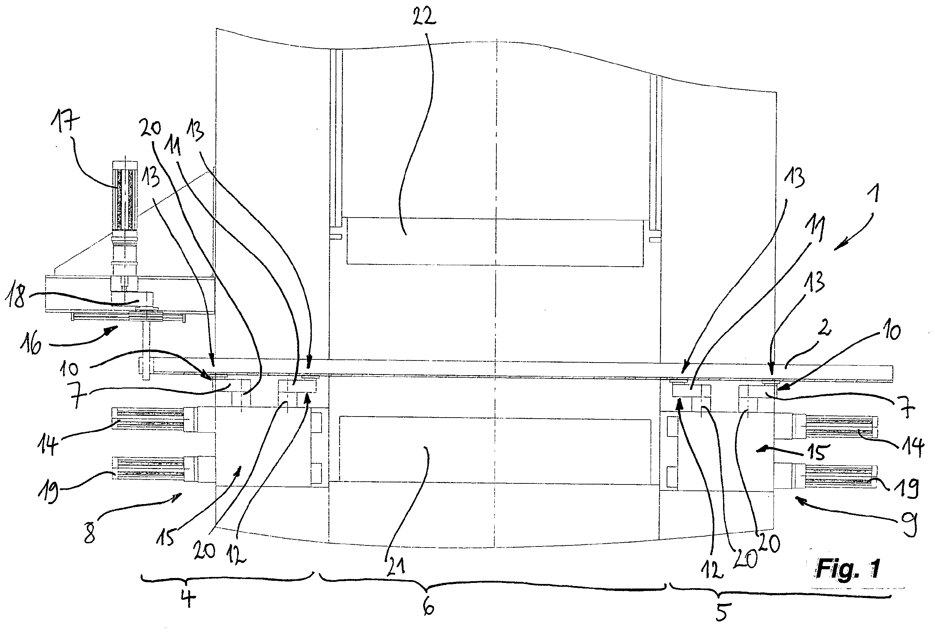

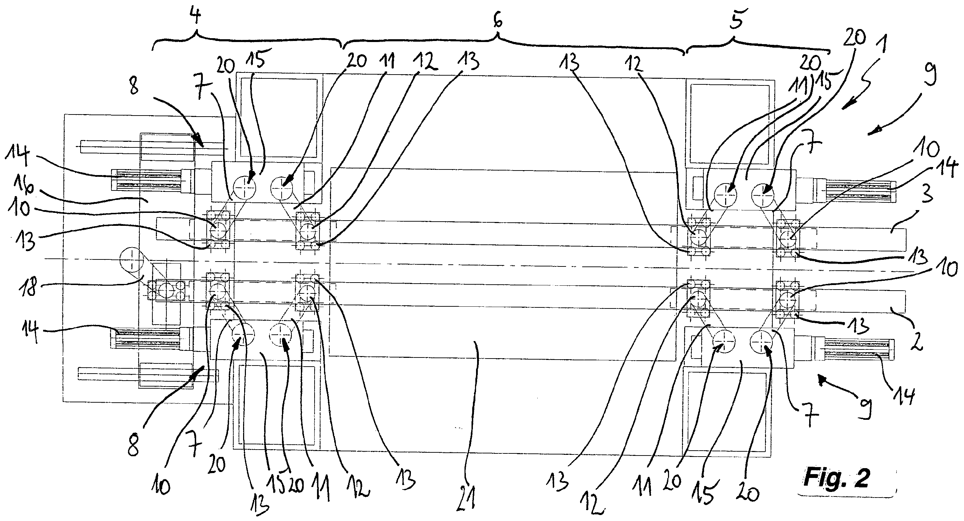

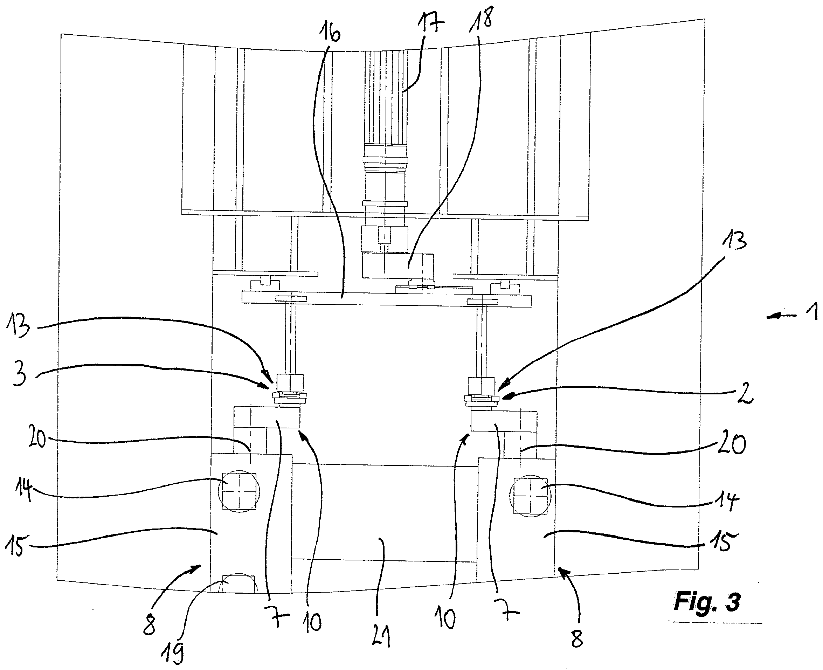

Figur 1 bis Figur 3 zeigen eine im Ganzen mit 1 bezeichnete erfindungsgemäße Vorrichtung zum schrittweisen Vorschieben von Werkstücken in unterschiedlichen Ansichten.

Die Vorrichtung 1 hat zwei parallel zueinander angeordnete Greifschienen 2, 3. Die Greifschienen 2, 3 sind aufeinander zu und voneinander weg bewegbar, um Werkstücke, die zwischen der ersten Greifschiene und der zweiten Greifschiene 3 liegen, zu greifen beziehungsweise freizugeben.

Die Greifschienen 2, 3 sind außerdem in noch genauer zu beschreibender Weise miteinander in einer Vorschubrichtung bewegbar, um die gegriffenen Werkstücke von einer Bearbeitungsstation zur nachfolgenden Bearbeitungsstation zu transportieren.

Jede der Greifschienen 2, 3 weist einen ersten Endbereich 4 und einen zweiten Endbereich 5 auf, zwischen denen ein Greifbereich 6 ausgebildet ist. In dem ersten Endbereich 4 und dem zweiten Endbereich 5 ist die jeweilige Greifschiene 2, 3 gehalten, während in dem Greifbereich 6 die bereits erwähnten Werkstücke mit nicht weiter dargestellten Werkstückaufnahmen gegriffen werden.

In jedem Endbereich 4, 5 jeder Greifschiene 2, 3 greift ein erster Schwingarm 7 einer Antriebseinheit 8, 9 an. Die Antriebseinheit 8 ist somit mit dem ersten Endbereich 4 zugeordnet, während die Antriebseinheit 9 dem zweiten Endbereich 5 zugeordnet ist.

Mit den Antriebseinheiten 8, 9 ist der jeweilige erste Schwingarm 7 verschwenkbar, wodurch die Greiferschienen 2, 3 aufeinander zu oder voneinander weg bewegbar sind.

Bei dieser Verschwenkbewegung wird jeweils ein freies Ende 10 entlang eines Kreisbogens verschwenkt.

Die Greifschiene 2, 3 ist an diesen freien Enden 10 der jeweils angreifenden ersten Schwingarme 7 längs ihrer Verlaufsrichtung verschieblich gehalten.

Jede Antriebseinheit 8, 9 weist zusätzlich zu dem jeweiligen ersten Schwingarm 7 einen zweiten Schwingarm 11 auf.

Die zweiten Schwingarme 11 sind ebenfalls verschwenkbar ausgebildet und weisen ein jeweiliges freies Ende 12 auf, welches während der Verschwenkbewegung einen Kreisbogen beschreibt.

Die zweiten Schwingarme 11 greifen mit ihren freien Enden 12 die jeweilige Greifschiene 2, 3 in demselben Endbereich 4, 5 an, in welchem der erste Schwingarm 7 derselben Antriebseinheit 8, 9 angreift.

An den freien Enden 12 ist die jeweilige Greiferschiene 2, 3 ebenfalls längs ihrer Verlaufsrichtung verschiebbar gehalten.

Das jeweilige freie Ende 12 des zweiten Schwingarms 11 einer Antriebseinheit 8, 9 ist hierbei zu dem freien Ende 10 des ersten Schwingarms 7 derselben Antriebseinheit 8, 9 beabstandet angeordnet, so dass der erste Schwingarm 7 beabstandet zu dem zweiten Schwingarm 11 an der jeweiligen Greifschiene 2, 3 angreift.

Um die Verschiebbarkeit längs der Verlaufsrichtung für die Greifschienen 2, 3 zu erreichen, ist an jedem freien Ende 10, 12 ein Gleit- und/oder Rolllager 13 ausgebildet, in welchem die jeweilige Greifschiene 2, 3 gelagert ist.

Im Ausführungsbeispiel ist das Gleit- und/oder Rolllager 13 jeweils als Rolllager ausgebildet.

Jede Antriebseinheit 8, 9 weist jeweils einen Elektromotor 14 auf, mit welchem die zugehörigen Schwingarme 7, 11 motorisch verschwenkbar sind.

Hierzu weist jede Antriebseinheit 8, 9 eine Koppeleinheit 15 auf, mit welcher der jeweilige erste Schwingarm 7 mit dem jeweiligen zweiten Schwingarm 11 mechanisch gekoppelt ist. Die Koppeleinheiten 15 bewirken jeweils eine mechanische Kopplung der Bewegungen der Schwingarme 7, 11 einer Antriebseinheit 8, 9 in der Weise, dass die Schwingarme 7, 11 gegenläufig verschwenkbar sind.

Beispielsweise kann hierzu die Koppeleinheit 15 einen gekreuzten Zahnriemen und/oder eine gerade Anzahl von miteinander kämmenden Zahnrädern und/oder ein Gestänge aufweisen.

Die Vorrichtung 1 weist weiter eine Traverse 16 auf, welche durch einen zweiten Elektromotor 17 motorisch antreibbar und horizontal in Vorschubrichtung verschiebbar ist.

Hierzu ist zwischen dem zweiten Elektromotor 17 und der Traverse 16 ein weiterer Schwingarm 18 angeordnet.

Die Traverse 16 ist mit beiden Greiferschienen 2, 3 gekoppelt und verbunden, so dass durch die Verschiebung der Traverser 16 die Greiferschienen 2, 3 entlang der Vorschubrichtung und entgegen zu dieser bewegbar sind.

Hierbei führen die Gleit- und/oder Rolllager 13 bei feststehenden ersten Schwingarmen 7 und zweiten Schwingarmen 11 diese Verschiebebewegung.

Diese Verschiebebewegung wird ausgeführt, um die gegriffenen Werkstücke in Vorschubrichtung zwischen den Bearbeitungspositionen zu transportieren.

Jede Antriebseinheit 8, 9 weist einen dritten Elektromotor 19 auf, mit welchem die ersten Schwingarme 7 und die zweiten Schwingarme 11 in Richtung ihrer Schwenkachsen 20 verschiebbar sind.

Auf diese Weise kann die jeweilige Greifschiene 2, 3 angehoben und gesenkt werden.

Somit sind gegriffene Werkstücke absetzbar und anhebbar. Zum Transport werden die Werkstücke zunächst durch Verschwenken der Schwingarme 7, 11 gegriffen, dann mit dem dritten Elektromotor 19 angehoben, dann mit dem zweiten Elektromotor 17 transportiert und anschließend abgesetzt und freigegeben.

Die Vorrichtung 1 weist eine nicht weiter dargestellte elektronische Ansteuereinheit auf, mit welcher die Verschwenkbewegungen der Schwingarme 7, 11 an einer Antriebseinheit 8 mit den Verschwenkbewegungen der Schwingarme 7, 11 an der zweiten Antriebseinheit 9, die an derselben Greifschiene 2, 3 angreift, synchronisierbar ist.

In dem Ausführungsbeispiel gemäß Figur 1 bis Figur 3 ist diese Synchronisation so eingerichtet, dass die ersten Schwingarme 7 des ersten Endbereichs 4 einerseits und des zweiten Endbereichs 5 andererseits gegeneinander verschwenkbar sind.

Hieraus ergibt sich eine gegenläufige Bewegung der ersten Schwingarme 7 gegeneinander sowie eine ebenfalls gegenläufige Bewegung der zweiten Schwingarme 11 jeweils derselben Greifschiene 2, 3 gegeneinander.

In Figur 1 ist zu sehen, dass die Schwenkachsen 20 der Schwingarme 7, 11 paarweise zueinander parallel ausgerichtet sind.

Unterhalb der Greifschienen 2, 3 ist ein Tisch angeordnet, auf welchem die zu transportierenden Werkstücke abgestellt werden können.

Oberhalb der Greifschienen 2, 3 ist ein Stößel 22 angeordnet, der vertikal beweglich ist.

Durch die Vertikalbewegung des Stößels 22 wird die gewünschte Verformung in jedem Bearbeitungsschritt auf die Werkstücke eingebracht. Hierzu weist der Stößel 22 nicht weiter dargestellte Formgebungswerkzeuge auf.

An den einander zugewandten Seiten der Greifschienen 2, 3 sind nicht weiter dargestellte Werkstückaufnahmen in den Greifbereich 6 angebracht, mit denen die Werkstücke aufnehmbar und fest haltbar sind.

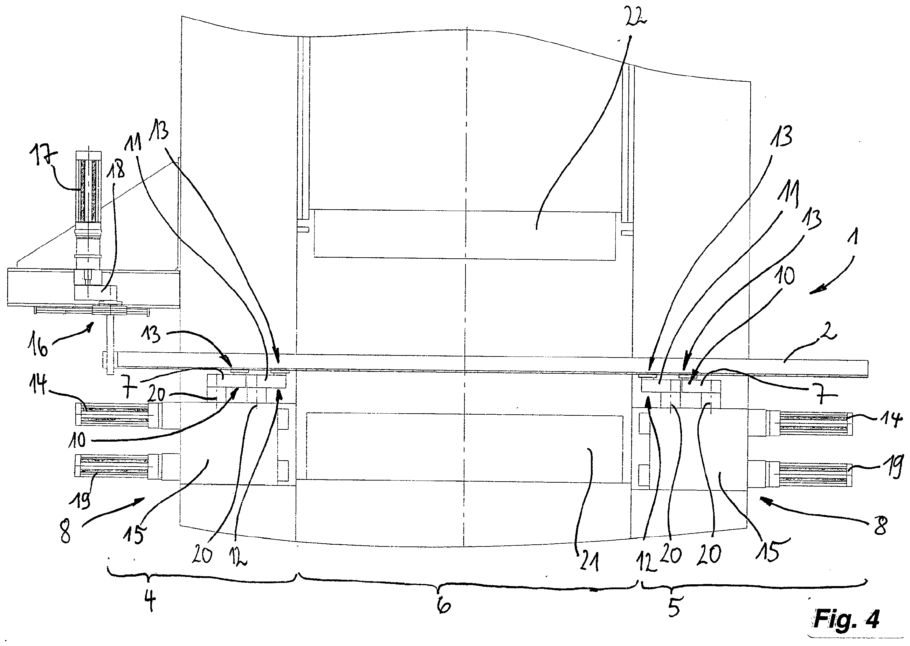

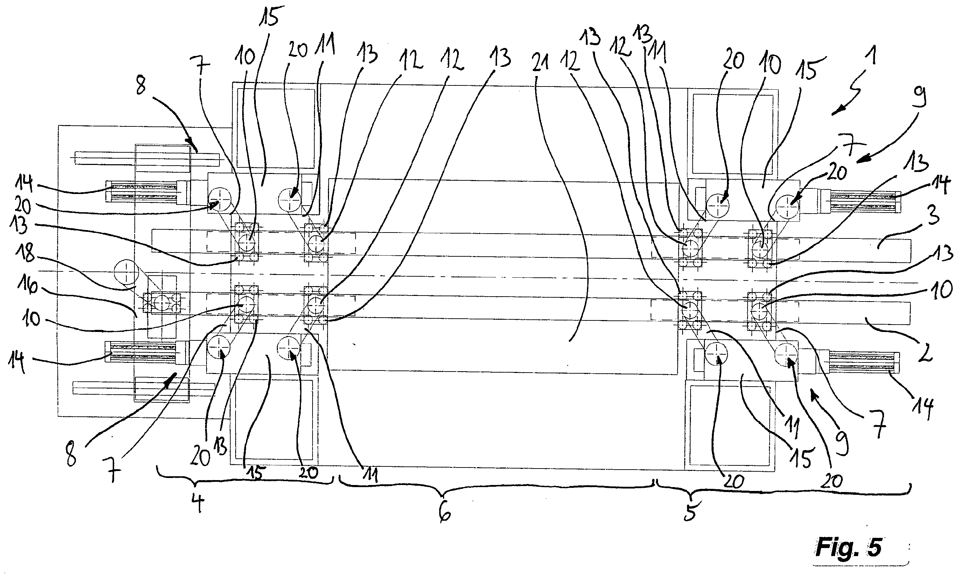

Die Figuren 4 und 5 zeigen ein weiteres Ausführungsbeispiel einer erfindungsgemäßen Vorrichtung 1. Funktionell und/oder konstruktiv zu dem Ausführungsbeispiel gemäß Figur 1 bis Figur 3 gleichartige oder identische Bauteile und Funktionseinheiten sind mit denselben Bezugszeichen bezeichnet und nicht noch einmal gesondert beschrieben. Die Ausführungen zu den Figuren 1 bis 3 gelten daher zu den Figuren 4 und 5 entsprechend.

Das Ausführungsbeispiel gemäß Figuren 4 und 5 unterscheidet sich von dem Ausführungsbeispiel gemäß den Figuren 1 bis 3 dadurch, dass die Antriebseinheiten 8, 9 Koppeleinheiten 15 aufweisen, welche zu einer gleichläufigen Verschwenkbewegung des jeweiligen ersten Schwingarms 7 mit dem jeweiligen zweiten Schwingarm 11 eingerichtet sind. Dies kann beispielsweise mechanisch durch Zahnriemen und/oder eine ungerade Anzahl von miteinander kämmenden Zahnrädern erreicht sein. Alternativ oder zusätzlich sind auch Gestänge verwendbar.

Auf diese Weise ist erreicht, dass während der Schwenkbewegungen die freien Enden 10, 12 zueinander einen konstanten Abstand an der Greifschiene 2, 3 einhalten.

Die bereits zu Figur 1 bis Figur 3 erwähnte elektronische Ansteuereinheit steuert die Elektromotoren 14 so an, dass die ersten Schwingarme 7 einer Antriebseinheit 8 gegenläufig zu dem ersten Schwingarm 7 der jeweils anderen, zweiten Antriebseinheit 9 derselben Greifschiene 2, 3 verschwenkbar sind und verschwenkt werden.

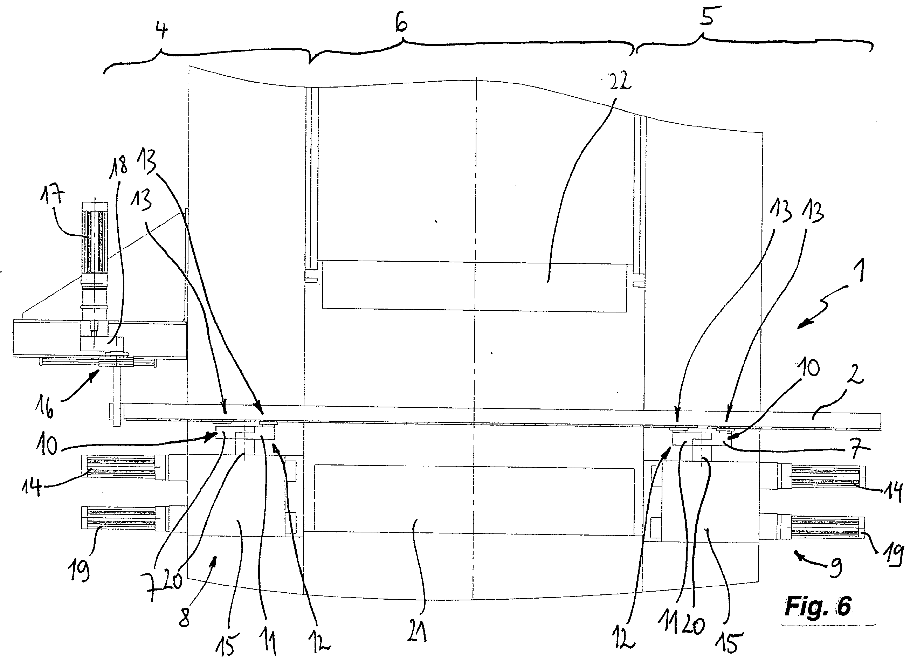

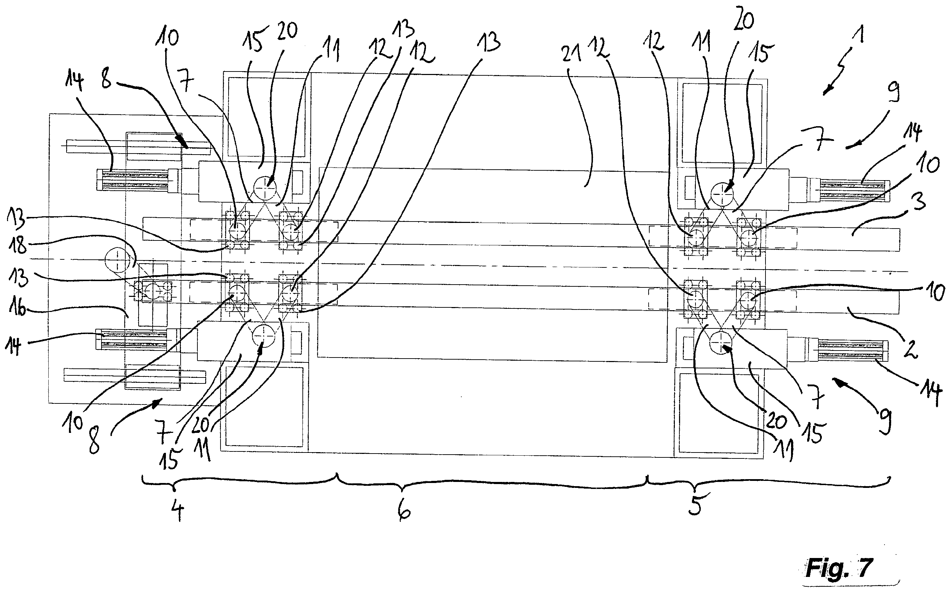

Figur 6 und Figur 7 zeigen ein weiteres Ausführungsbeispiel einer erfindungsgemäßen Vorrichtung. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 5 gelten daher zu den Figuren 6 und 7 entsprechend.

Das Ausführungsbeispiel gemäß den Figuren 6 und 7 unterscheidet sich von dem Ausführungsbeispiel gemäß den Figuren 1 bis 3 dadurch, dass der erste Schwingarm 7 und der zweite Schwingarm 11 einer Antriebseinheit 8, 9 eine gemeinsame Schwenkachse 20 aufweisen. Die Schwenkachsen 20 einer Antriebseinheit 8, 9 fallen somit in diesem Ausführungsbeispiel zusammen.

Der erste Schwingarm 7 wird hierbei relativ zu dem zugehörigen zweiten Schwingarm 11 gegenläufig verschwenkt, was durch eine entsprechend eingerichtete Koppeleinheit 15, beispielsweise durch ein Gestänge, erreicht ist.

Die ersten Schwingarme 7 der Endbereiche 4, 5 sind wieder durch die bereits erwähnte elektronische Ansteuereinheit gegenläufig verschwenkbar.

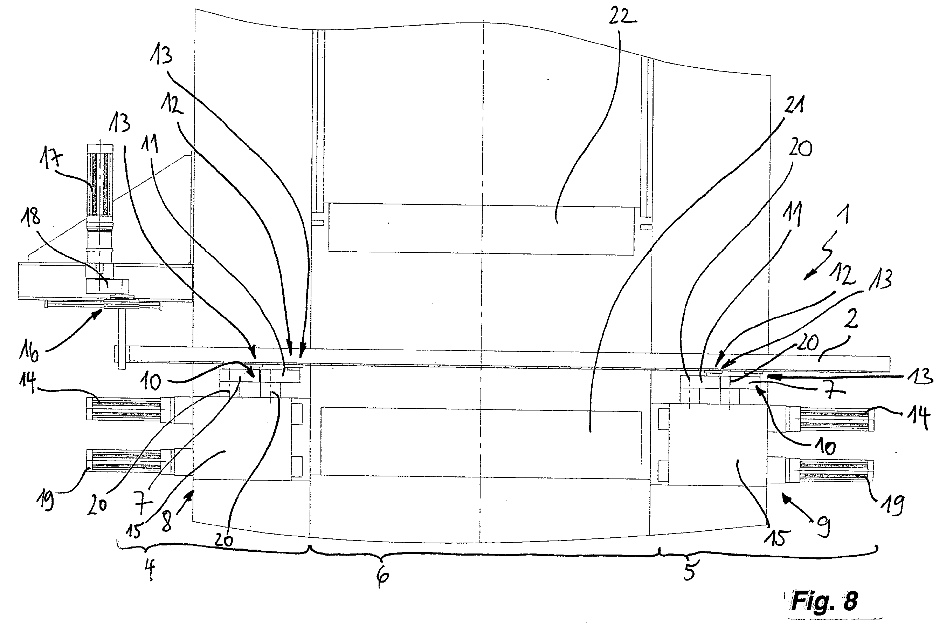

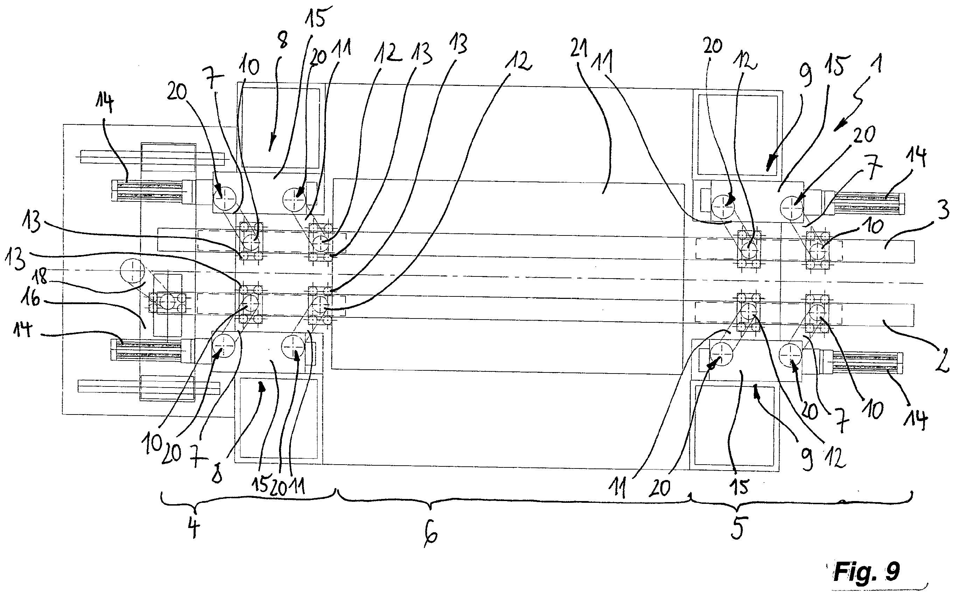

Die Figuren 8 und 9 zeigen ein weiteres erfindungsgemäßes Ausführungsbeispiel einer Vorrichtung 1 zum schrittweisen Verschieben von Werkstücken. Funktionell und/oder konstruktiv zu den vorangehenden Ausführungsbeispielen gleichartige oder identische Bauteile oder Funktionseinheiten sind wieder mit denselben Bezugszeichen bezeichnet und nicht noch einmal gesondert beschrieben. Die Ausführungen zu den Figuren 1 bis 7 gelten daher zu den Figuren 8 und 9 entsprechend.

Das Ausführungsbeispiel gemäß Figuren 8 und 9 unterscheidet sich von den vorangehenden Ausführungsbeispielen dadurch, dass die Koppeleinheit 15 so eingerichtet ist, dass der erste Schwingarm 7 einer Antriebseinheit 8, 9 gleichläufig zu dem zweiten Schwingarm 11 derselben Antriebseinheit 8, 9 verschwenkbar ist und verschwenkt wird.

Zusätzlich ist die elektronische Ansteuereinheit so eingerichtet, dass die Elektromotoren 14 in der Weise verfahrbar sind und verfahren werden, dass die ersten Schwingarme 7 an einer Greifschiene 2, 3 gleichläufig miteinander verschwenkbar sind und verschwenkt werden. Hierdurch bleibt der Abstand zwischen den freien Enden 10 an einer Greifschiene 2 über die gesamte Verschwenkbewegung konstant.

Allgemein kann gesagt werden, dass die Ansteuerung und/oder Kopplung der Schwingarme 7, 11 miteinander so eingerichtet ist/sind, dass die Greifschienen 2, 3 während der Vorschubbewegungen parallel ausgerichtet bleiben. Hierzu ist je nach Bedarf eine der vorgestellten Varianten oder eine weitere Variante der Kombination von gleichläufigen und gegenläufigen Verschwenkbewegungen der Schwingarme 7, 11 relativ zueinander verwendbar.

Bei der Vorrichtung 1 zum schrittweisen Verschieben von Werkstücken wird vorgeschlagen, an jeder Greifschiene 2, 3 von zwei parallel zueinander angeordneten Greifschienen 2, 3 zum Erfassen und zum Transport der Werkstücke in einem ersten Endbereich 4 und einem zweiten Endbereich 5, die einen Greifbereich 6 zwischen sich einschließen, jeweils einen ersten Schwingarm 7 und einen zweiten Schwingarm 11 einer Antriebseinheit 8, 9 auszubilden, die die jeweilige Greifschiene 2, 3 beabstandet zueinander angreifen und längs einer Verlaufsrichtung der Greifschiene 2, 3 verschieblich halten.

### Bezugszeichenliste

- 1: Vorrichtung
- 2: Greifschiene
- 3: Greifschiene
- 4: erster Endbereich
- 5: zweiter Endbereich
- 6: Greifbereich
- 7: erster Schwingarm
- 8: Antriebseinheit
- 9: Antriebseinheit
- 10: freies Ende
- 11: zweiter Schwingarm
- 12: freies Ende
- 13: Gleit- und/oder Rolllager
- 14: Elektromotor
- 15: Koppeleinheit
- 16: Traverse
- 17: zweiter Elektromotor
- 18: weiterer Schwingarm
- 19: dritter Elektromotor
- 20: Schwenkachse
- 21: Tisch
- 22: Stößel

## Patentansprüche

1. Vorrichtung (1) zum schrittweisen Vorschieben von Werkstücken, mit zwei parallel zueinander angeordneten Greifschienen (2, 3), die zum Erfassen und zum Transport der Werkstücke in einer Vorschubrichtung bewegbar sind, wobei jede Greifschiene (2, 3) zwischen einem ersten Endbereich (4) und einem zweiten Endbereich (5) einen Greifbereich (6) aufweist, wobei in dem ersten Endbereich (4) und in dem zweiten Endbereich (5) jeweils ein verschwenkbarer erster Schwingarm (7) einer Antriebseinheit (8) angreift, wobei die Greifschiene (2, 3) an einem freien Ende (10) des ersten Schwingarms (7) längs ihrer Verlaufsrichtung verschieblich gehalten ist, **dadurch gekennzeichnet, dass** jede Antriebseinheit (8, 9) einen zweiten verschwenkbaren Schwingarm (11) aufweist, welcher in der Verlaufsrichtung beabstandet zu dem ersten Schwingarm (7) an der Greifschiene (2, 3) angreift, und dass die Greifschiene (2, 3) an einem freien Ende (12) des zweiten Schwingarms (11) längs ihrer Verlaufsrichtung verschieblich gehalten ist.

2. Vorrichtung (1) nach Anspruch 1, **dadurch gekennzeichnet, dass** der erste Schwingarm (7) und/oder der zweite Schwingarm (11) die Greifschiene (2, 3) in einem Gleit- und/oder Rolllager (13) hält/halten.

3. Vorrichtung (1) nach einem der vorangehenden Ansprüche, **dadurch gekennzeichnet, dass** der erste Schwingarm (7) und der zweite Schwingarm (11) einer Antriebseinheit (8, 9) von einem gemeinsamen Elektromotor (14) angetrieben sind.

4. Vorrichtung (1) nach einem der vorangehenden Ansprüche, **dadurch gekennzeichnet, dass** der erste Schwingarm (7) elektrisch und/oder mechanisch mit dem zweiten Schwingarm (11) gekoppelt ist.

5. Vorrichtung (1) nach einem der vorangehenden Ansprüche, **dadurch gekennzeichnet, dass** jede Antriebseinheit (8, 9) zu einem gegenläufigen Verschwenken des ersten Schwingarms (7) und des zweiten Schwingarms (11) gegeneinander eingerichtet ist und/oder dass jede Antriebseinheit (8, 9) zu einem gleichläufigen Verschwenken des ersten Schwingarms (7) und des zweiten Schwingarms (11) miteinander eingerichtet ist.

6. Vorrichtung (1) nach einem der vorangehenden Ansprüche, **dadurch gekennzeichnet, dass** die zwei Greifschienen (2, 3) mit einer Traverse (16) verbunden sind, welche in Vorschubrichtung motorisch bewegbar ist, und/oder dass die Schwingarme (7, 11) an der jeweiligen Antriebseinheit (8, 9) entlang einer jeweiligen Schwenkachse (20) der Verschwenkbewegung verschiebbar angeordnet sind, insbesondere motorisch antreibbar verschiebbar.

7. Vorrichtung (1) nach einem der vorangehenden Ansprüche, **dadurch gekennzeichnet, dass** eine Ansteuereinheit zu einem gegenläufigen Verschwenken des ersten Schwingarms (7) einer an dem ersten Endbereich (4) der Greifschiene (2, 3) angreifenden ersten Antriebseinheit (8) einerseits und des ersten Schwingarms (7) einer an dem zweiten Endbereich (5) der Greifschiene (2, 39 angreifenden zweiten Antriebseinheit (9) andererseits gegeneinander eingerichtet ist und/oder dass eine Ansteuereinheit zu einem gleichläufigen Verschwenken des ersten Schwingarms (7) einer an dem ersten Endbereich (4) der Greifschiene (2, 3) angreifenden ersten Antriebseinheit (8) einerseits und des ersten Schwingarms (7) einer an dem zweiten Endbereich (5) der Greifschiene (2, 3) angreifenden zweiten Antriebseinheit (9) andererseits miteinander eingerichtet ist.

8. Vorrichtung (1) nach einem der vorangehenden Ansprüche, **dadurch gekennzeichnet, dass** der erste Schwingarm (7) und der zweite Schwingarm (11) einer Antriebseinheit (8, 9) um zueinander parallele Schwenkachsen (20) verschwenkbar sind.

9. Vorrichtung (1) nach einem der vorangehenden Ansprüche, **dadurch gekennzeichnet, dass** die Greifschienen (2, 3) oberhalb eines Tisches (21) und/oder unterhalb eines vorzugsweise Formgebungswerkzeuge tragenden und/oder vertikal beweglichen Stößels (22) angeordnet sind.

10. Vorrichtung (1) nach einem der vorangehenden Ansprüche, **dadurch gekennzeichnet, dass** an den Greifschienen (2, 3) Werkstückaufnahmen ausgebildet sind.

## Claims

1. Device (1) for incrementally advancing workpieces, having two gripping rails (2, 3) that are arranged parallel to one another and are movable in order to take hold of and transport the workpieces in an advancing direction, wherein each gripping rail (2, 3) has a gripping region (6) between a first end region (4) and a second end region (5), wherein a respective pivotable first swing arm (7) of a drive unit (8) acts in the first end region (4) and in the second end region (5), wherein the gripping rail (2, 3) is held so as to be displaceable in its extension direction at a free end (10) of the first swing arm (7), **characterized in that** each drive unit (8, 9) has a second pivotable swing arm (11), which acts on the gripping rail (2, 3) at a distance from the first swing arm (7) in the extension direction, and **in that** the gripping rail (2, 3) is held so as to be displaceable in its extension direction at a free end (12) of the second swing arm (11).

2. Device (1) according to Claim 1, **characterized in that** the first swing arm (7) and/or the second swing arm (11) hold(s) the gripping rail (2, 3) in a plain bearing and/or roller bearing (13).

3. Device (1) according to either of the preceding claims, **characterized in that** the first swing arm (7) and the second swing arm (11) of a drive unit (8, 9) are driven by a common electric motor (14).

4. Device (1) according to one of the preceding claims, **characterized in that** the first swing arm (7) is coupled to the second swing arm (11) electrically and/or mechanically.

5. Device (1) according to one of the preceding claims, **characterized in that** each drive unit (8, 9) is set up to pivot the first swing arm (7) and the second swing arm (11) in opposite directions to one another, and/or **in that** each drive unit (8, 9) is set up to pivot the first swing arm (7) and the second swing arm (11) in the same direction as one another.

6. Device (1) according to one of the preceding claims, **characterized in that** the two gripping rails (2, 3) are connected by a cross member (16) which is movable in the advancing direction by a motor, and/or **in that** the swing arms (7, 11) are arranged on the respective drive unit (8, 9) so as to be displaceable along a respective pivot axis (20) of the pivoting movement, in particular displaceable in a motor-drivable manner.

7. Device (1) according to one of the preceding claims, **characterized in that** a control unit is set up to pivot the first swing arm (7) of a first drive unit (8) acting on the first end region (4) of the gripping rail (2, 3), for the one part, and the first swing arm (7) of a second drive unit (9) acting on the second end region (5) of the gripping rail (2, 3), for the other part, in opposite directions to one another, and/or **in that** a control unit is set up to pivot the first swing arm (7) of a first drive unit (8) acting on the first end region (4) of the gripping rail (2, 3), for the one part, and the first swing arm (7) of a second drive unit (9) acting on the second end region (5) of the gripping rail (2, 3), for the other part, in the same direction as one another.

8. Device (1) according to one of the preceding claims, **characterized in that** the first swing arm (7) and the second swing arm (11) of a drive unit (8, 9) are pivotable about mutually parallel pivot axes (20).

9. Device (1) according to one of the preceding claims, **characterized in that** the gripping rails (2, 3) are arranged above a table (21) and/or beneath a ram (22) that carries preferably shaping tools and/or is vertically movable.

10. Device (1) according to one of the preceding claims, **characterized in that** workpiece receptacles are formed on the gripping rails (2, 3).

## Revendications

1. Dispositif (1) pour l'avance incrémentielle de pièces à usiner, avec deux rails de saisie (2, 3) disposés parallèlement l'un à l'autre, qui sont déplaçables pour la saisie et le transport des pièces à usiner dans une direction d'avance, dans lequel chaque rail de saisie (2, 3) présente une zone de saisie (6) entre une première zone d'extrémité (4) et une seconde zone d'extrémité (5), dans lequel un premier bras oscillant pivotant (7) d'une unité d'entraînement (8) est attaché dans la première zone d'extrémité (4) et dans la seconde zone d'extrémité (5) respectivement, dans lequel le rail de saisie (2, 3) est maintenu à une extrémité libre (10) du premier bras oscillant (7) de façon déplaçable le long de sa direction d'extension, **caractérisé en ce que** chaque unité d'entraînement (8, 9) présente un second bras oscillant pivotant (11), qui est attaché au rail de saisie (2, 3) à distance du premier bras oscillant (7) dans la direction d'extension, et **en ce que** le rail de saisie (2, 3) est maintenu à une extrémité libre (12) du second bras oscillant (11) de façon déplaçable le long de sa direction d'extension.

2. Dispositif (1) selon la revendication 1, **caractérisé en ce que** le premier bras oscillant (7) et/ou le second bras oscillant (11) supporte(nt) le rail de saisie (2, 3) dans un palier lisse et/ou un palier à roulement (13).

3. Dispositif (1) selon l'une quelconque des revendications précédentes, **caractérisé en ce que** le premier bras oscillant (7) et le second bras oscillant (11) d'une unité d'entraînement (8, 9) sont entraînés par un moteur électrique commun (14).

4. Dispositif (1) selon l'une quelconque des revendications précédentes, **caractérisé en ce que** le premier bras oscillant (7) est couplé électriquement et/ou mécaniquement au second bras oscillant (11).

5. Dispositif (1) selon l'une quelconque des revendications précédentes, **caractérisé en ce que** chaque unité d'entraînement (8, 9) est conçue pour un pivotement de sens opposé du premier bras oscillant (7) et du second bras oscillant (11) l'un par rapport à l'autre et/ou **en ce que** chaque unité d'entraînement (8, 9) est conçue pour un pivotement de même sens du premier bras oscillant (7) et du second bras oscillant (11) l'un avec l'autre.

6. Dispositif (1) selon l'une quelconque des revendications précédentes, **caractérisé en ce que** les deux rails de saisie (2, 3) sont reliés avec une traverse (16), qui est déplaçable par un moteur dans la direction d'avance, et/ou **en ce que** les bras oscillants (7, 11) sont disposés sur l'unité d'entraînement respective (8, 9) de façon déplaçable le long d'un axe de pivotement respectif (20) du mouvement de pivotement, en particulier de façon déplaçable par entraînement motorisé.

7. Dispositif (1) selon l'une quelconque des revendications précédentes, **caractérisé en ce qu'**une unité de commande est conçue pour un pivotement de sens opposé du premier bras oscillant (7) d'une première unité d'entraînement (8) attachée à la première zone d'extrémité (4) du rail de saisie (2, 3) d'une part et du premier bras oscillant (7) d'une seconde unité d'entraînement (9) attachée à la seconde zone d'extrémité (5) du rail de saisie (2, 3) d'autre part et/ou **en ce qu'**une unité de commande est conçue pour un pivotement de même sens du premier bras oscillant (7) d'une première unité d'entraînement (8) attachée à la première zone d'extrémité (4) du rail de saisie (2, 3) d'une part et du premier bras oscillant (7) d'une seconde unité d'entraînement (9) attachée à la seconde zone d'extrémité (5) du rail de saisie (2, 3) d'autre part.

8. Dispositif (1) selon l'une quelconque des revendications précédentes, **caractérisé en ce que** le premier bras oscillant (7) et le second bras oscillant (11) d'une unité d'entraînement (8, 9) peuvent pivoter autour d'axes de pivotement (20) parallèles l'un à l'autre.

9. Dispositif (1) selon l'une quelconque des revendications précédentes, **caractérisé en ce que** les rails de saisie (2, 3) sont disposés au-dessus d'une table (21) et/ou en dessous d'un poinçon (22) portant de préférence des outils de formage et/ou mobile verticalement.

10. Dispositif (1) selon l'une quelconque des revendications précédentes, **caractérisé en ce que** des logements de pièces à usiner sont formés sur les rails de saisie (2, 3).
